# EUROPEAN PATENT SPECIFICATION

(11) **EP 0 985 883 B1**
(45) Date of publication and mention of the grant of the patent: **24.05.2006**
(21) Application number: 99116096.1
(22) Date of filing: 17.08.1999
(51) Int. Cl.: F24B 13/04, F24B 1/02

(54) **Heating means**
Heizvorrichtung
Dispositif de chauffage

(30) Priority: 19.08.1998 IT MO980181; 26.10.1998 IT MO980221; 26.10.1998 IT MO980220
(43) Date of publication of application: 15.03.2000
(73) Proprietor: Eurofiamma S.R.L., 43024 Neviano degli Arduini Parma (IT)
(72) Inventor: Tirrito, Renato, 27029 Vigevano/Pavia (IT); Ugolotti, Tonino, 43024 Neviano degli Arduini/Parma (IT); Baricca, Ermanno, 42100 Reggio Emilia (IT)
(74) Representative: Luppi, Luigi

(56) References cited:
- DE-A- 3 226 877
- DE-U- 9 218 953

## Description

The invention relates to heating means in order to heat residential rooms.

The prior art includes wood-burning stoves provided with a combustion chamber which is loaded with firewood through an opening, that can be closed by a shutter, obtained on a side wall delimiting a combustion chamber. The smokes produced by the wood combustion are ejected through a smoke pipe communicating the combustion chamber to the exterior.

A defect of such devices results from the used fuel type, whose combustion causes a relative high production of carbon monoxide which is responsible of environmental problems such as the rising of the average temperature of our planet due to the so-called greenhouse effect. A further defect is found in the high amount of solid residual combustion products which force the user to accomplish frequent and tiring cleaning operations.

Heating devices are furthermore known which use as fuel the so-called "pellets" of wood. These pellets are obtained from residual products of the wood working (sawdust or chips) which are subjected to a high pressure in order to obtain compact products having a substantially cylindrical shape. The pellets are obtained without the use of polluting additives; they are characterized by a very low humidity percentage and therefore they burn easily. The combustion of such products furthermore produces a rather low amount of solid residual products; also the production of carbon monoxide results equally low. Furthermore, the synthesis of carbon dioxide (CO2) during the combustion appears compatible with the environmental requirements. Devices which use the pellets as fuel comprise a combustion chamber delimited by a wall on which an opening is obtained that can be closed by a shutter. At the interior of the combustion chamber is accommodated a brazier designed to receive the pellets in order to contain them while burning.

These devices work at forced circulation, i.e. they present, upward to the combustion chamber, a suction and smokes unloading chamber provided with a fan suitable to intake the smokes themselves and to produce a vacuum pressure needed to create an air flow inside the combustion chamber essential in order to cause that the pellets can burn. Instead a smoke pipe does not appear as necessary as in the usual wood-burning stoves due to the low production of CO2 generated by the combustion of the pellets. A further fan, placed in a lower region of the device, draws air from the external environment and conveys it along a suitable path so as air is heated and again admitted into the external environment. A fuel tank, near the combustion chamber, is suitable to contain a high amount of pellets so as to assure to the device a considerable working duration. The fuel loading into the brazier results through a screw conveyor (driven by a motor-reducer) which draws the pellets from a bottom region of the tank in order to convey them inside the combustion chamber in a region above the brazier. From this last region, a slide ramp of suitable length drives the fuel fall into the brazier. The apparatus can be furthermore equipped with an electronic board suitable to accomplish different operations such as the ignition, the putting out and the selection of a stated temperature. The keeping of the desired temperature and of a suitable pressure inside the combustion chamber is accomplished by devices as pressure and thermo-swithces that interact with the fans and the motor-reducer.

DE 3226877 discloses a boiler, suitable for alternative or joint combustion of wood chippings and/or sawdust and pieces of wood, provided with a combustion chamber to which a conveying device, a combustion-air supply device, an exhaust fume conduit and a hot-air exchange device are connected. The combustion chamber has a combustion grille that occupies from 40% to 80% of the transverse section of the combustion chamber, the conveying device leads into a loading hopper that occupies the section surface of the combustion chamber kept free by the grille. In addition to the conveying device, there is provided an opening for manual filling on the side and/or top wall of the combustion chamber.

The above-mentioned devices can not properly work while accomplishing the combustion of other types of fuel such as the natural wood; in effect the excessive amount of CO2 produced could not be delivered without a smoke pipe.

In the pellets burning devices there is the risk that the high temperature present in the combustion chamber can produce the combustion of the pellets already on the slide ramp which conveys them onto the brazier, with the eventuality of the combustion propagation to the pellets present into the screw conveyor and from here to the pellets contained in the tank near the combustion chamber, with consequent risk of propagation of fire.

Apparatus for the heating of rooms are furthermore known, the so-called fire-places, constituted by a hearth open toward the room to be heated, wherein the fuel to be burnt is placed, generally pieces of wood, and a smoke pipe for the unloading of the smokes produced by the combustion. These devices have a very low efficiency, because a large amount of the heat produced by the combustion is wasted through the smoke pipe. Furthermore they do not allow to use fuel in small pieces, such as the wood pellets.

A heating means according to the preamble of claim 1 is known from DE-U-9218953.

An object of the present invention is to improve the known means for the heating of residential rooms.

A further object is to make more versatile the known means for the heating of residential rooms.

Another object of the present invention is to make more safe the above-mentioned means for the heating of residential rooms.

Still another object of the present invention is to improve the efficiency of the fire-places.

These objects are achieved by a heating means according to claim 1.

The first fuel materials can be pieces of natural wood, while the second fuel materials can be pellets of wood, solid fuels of small size, or granular, for example fuel materials shattered as olive-stones brushed and shattered, walnut-shells, or hazel-nuts, or other else.

In such manner, it is possible to accomplish, with a same apparatus, either the combustion of wood, either the combustion of pellets or similar.

In a particularly advantageous version, the combustion chamber and the container means constitute two distinct units interconnected by the conveyor means.

The conveyor means advantageously includes in a first section screw conveyor means and possibly in a second section a slide ramp suitable to drive the fall of the pellets into a brazier of the combustion chamber.

Therefore, in case one of the two units is out of work, for example the container means, it is possible to substitute such unit while continuing to use the other one (the combustion chamber). In this way the substitution involves relatively low costs.

In a further version, the means for heating of rooms is constituted by a single unit and the combustion chamber and the container means are separated by a dividing wall.

In this manner the apparatus results easy transportable. The container means may be provided suitable to contain solid, granular fuel materials and conveyor means of said solid, granular fuel materials which is suitable to convey said granular, solid fuel materials between said container means and a combustion chamber.

That allows to accomplish the means for the heating of rooms according to the invention by using a pre-existing normal wood stove to which a hole has been made for the insertion of the conveyor means.

In a particularly advantageous version, the set of the heating means and the container means presents such shape and dimensions that it can be inserted into the hearth of a fire-place.

In such a manner the efficiency of the fire-place is particularly improved.

The means for the heating of rooms is provided including a combustion chamber provided with an inlet arranged to introduce first fuel materials in said combustion chamber, an outlet through which combustion smokes can leave said combustion chamber, and includes furthermore cooling means suitable to cool said further fuel means in said conveyor means.

In this way it is possible to hold the temperature of the further fuel materials, during their transfer to the combustion chamber, considerably below their combustion temperature, preventing the risk that their combustion starts while still inside the conveyor means and can propagate to the container means.

That makes the heating means particularly safe.

The invention could be better understood and put into practice with reference to the enclosed drawings, which show, for nonlimiting example purpose, some embodiment thereof, wherein:

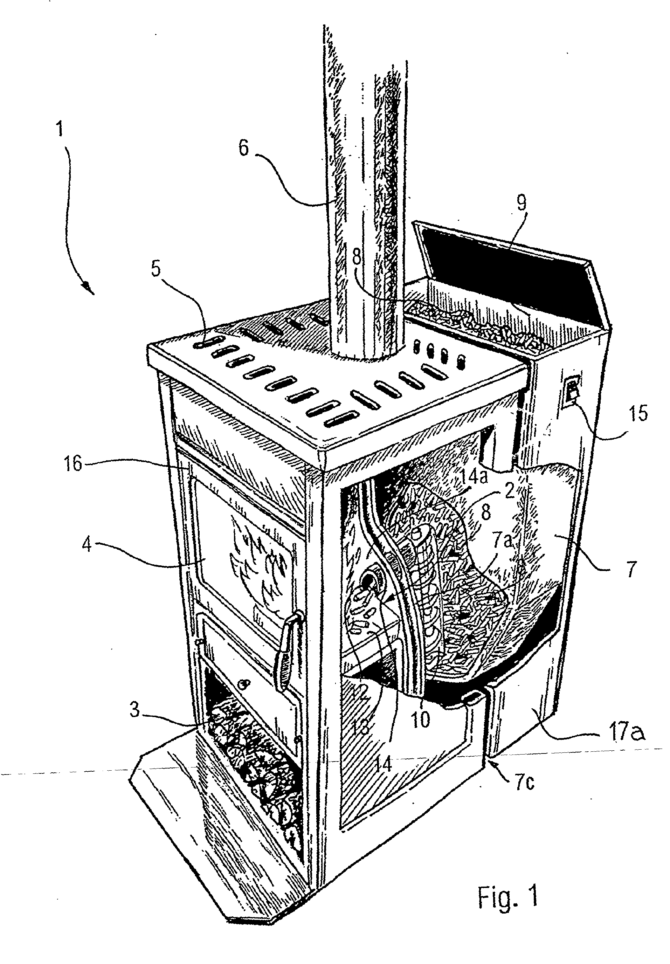

Figure 1 is a schematic perspective view of a stove according to the invention;
Figure 2 is schematic view, like that in Figure 1, but in a version provided with cooling means;
Figure 3 is a vertical section of container means according to the invention;
Figure 4 is a front view of an insert for fire-place;
Figure 5 is the V-V section of Figure 4;

A domestic stove 1 includes a combustion chamber 2 suitable to be loaded with wood 3 that can be introduced into the combustion chamber 2 through an opening 4. The air heated by the combustion of the wood 3 propagates to the environment to be heated through outlet slot 5, obtained at the top of the combustion chamber 2, besides by irradiation. The smokes produced by the combustion, containing a high amount of CO2, are ejected through a smoke pipe 6 which connects the combustion chamber 2 to an environment external to the room to be heated.

Container means 7 suitable to contain pellets 8 shows a loading opening 9 obtained at the top of the container means 7 and suitable to allow the loading of pellets 8 inside the container means 7.

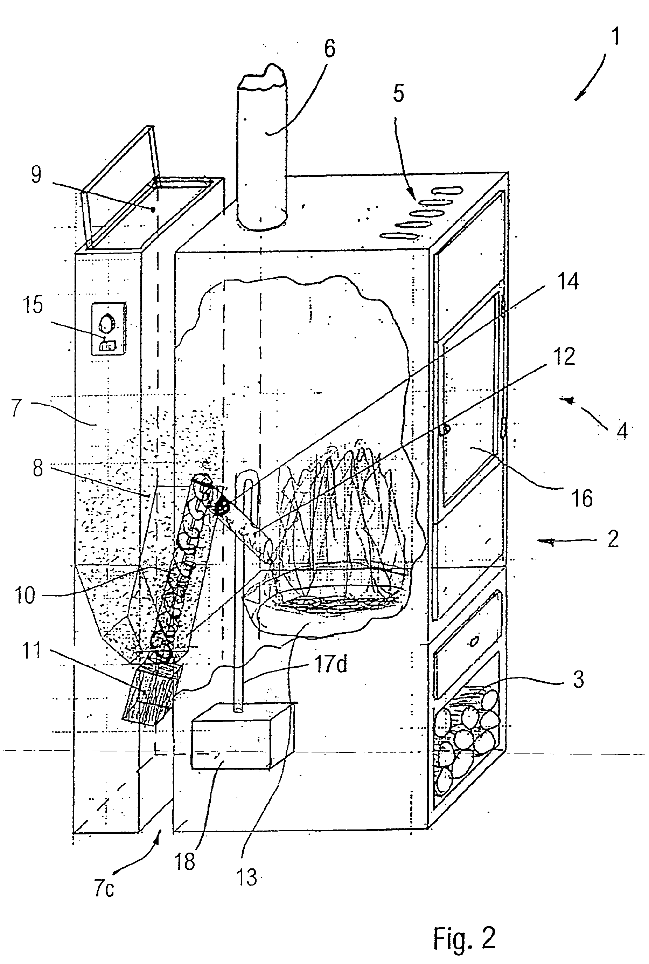

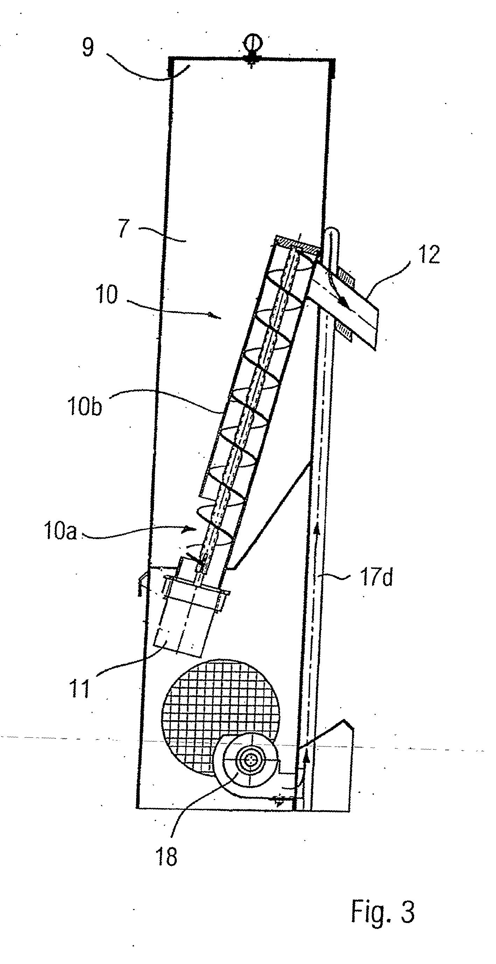

The pellets 8 are subject to be conveyed from the container means 7 to the combustion chamber 2 through an Archimedean screw conveyor 10 driven by a motor-reducer 11 (Figure 2). The Archimedean screw conveyor 10 is suitable to draw the pellets 8 from a bottom region of the container means 7 through a mouth 10a (Figure 3) provided in a bottom region of a covering 10b of the Archimedean screw conveyor 10. The pellets drawn through the mouth 10a are transferred to the top of a gravity duct, or slide ramp, 12 which is suitable to drive the fall of the pellets 8 toward a brazier 13 placed at the inner side of the combustion chamber 2. The slide ramp 12 results partially introduced into the combustion chamber 2 through a hole 14 made on a lateral surface 14a thereof.

An electrical control device 15, in case including an electronic board, placed on an external covering surface 17a of the container means 7, allows the user to start up the apparatus 1, to turn off it and to select a desired temperature level.

Pressure and thermo-switches, if any, not shown, allow the control of the temperature into the heated rooms. A shutter 16 placed on a lateral surface of the combustion chamber 2 can include a glass slab in order to allow a better irradiation and the visual control of the interior of the chamber 2 and results suitable to be opened in order to allow the periodical cleaning operations.

In a version not shown, the container means can pour out the second fuel 8 into the combustion chamber 2 by fall through a star-valve that can be driven in automatic, semi-automatic or manual way.

As shown in Figure 2, the slide ramp 12 is connected to a first end of a duct means 17d, for example having the shape of a pipe ending in a downwards "U" shaped section and having a second end connected to fan means 18 suitable to send into the duct means 17d cold air coming from the environment external to the heating means 1. It is to be understood that the adoption of the fan means 18 is preferential, but not essential, because, during the working, the combustion chamber 2 lies in light depression due to the draft of the smokes and therefore cold air is anyhow sucked through the duct means 17d and cools the slide ramp 12 and the material contained therein, if any.

The cold air sent into the slide ramp 12 according to the way shown by the arrows in Figure 3 along the duct means 17d prevents the pellets 8 into it from the possibility of overheating, due to the hot air penetrating into the slide ramp 12 from the combustion chamber 2, up to reach the combustion temperature, propagating the combustion to the pellets contained into the Archimedean screw 10 and those contained into the tank 7.

It is furthermore noted that, in case of forced draft, the risk that the pellets 8 into the slide ramp 12 and the Archimedean screw 10 can overheat is very reduced, because the forced draft opposes the penetration of the hot air into the slide ramp 12. In this case the duct means 17d and the fan 18, if any, have the function of safety elements, in order to prevent the overheating of the pellets 8 in the case that the forced draft stops. It is noticed, with reference to this, that anyhow the forced draft is not necessary for the correct working of the stove according to the invention.

The first end of the duct means 17d can also be connected, instead of to the slide ramp 12, to the Archimedean screw 10, so that the cold air coming from the duct means 17d is sent to the Archimedean screw 10 and, from there, to the slide ramp 12.

The container means 7 is arranged with respect to the stove 1 so as to define between the wall 14a thereof and the corresponding wall 7a of the container means 7 a hollow space 7c into which the duct means 17d can pass and in case also an air flow which draws heat from the wall 14a and brings it in the environment under the action of the fan 18.

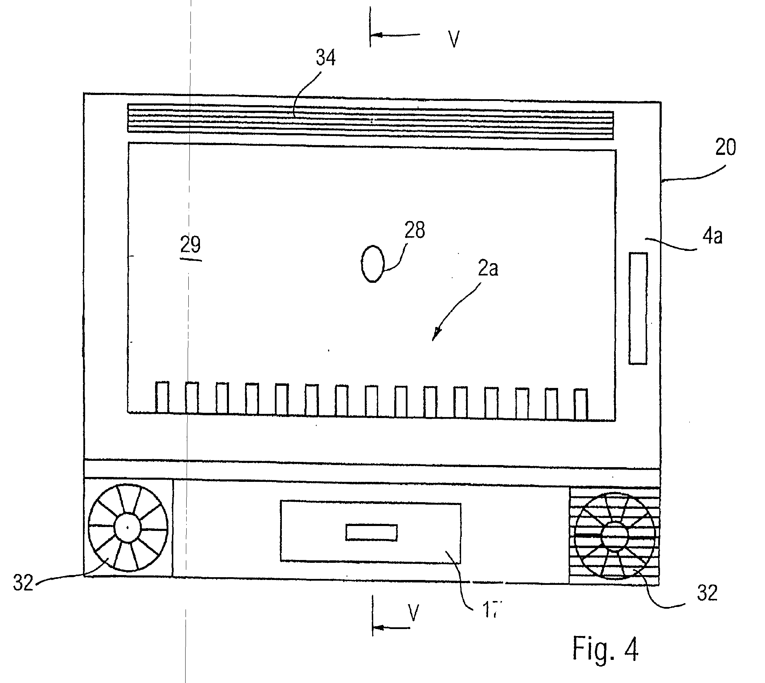

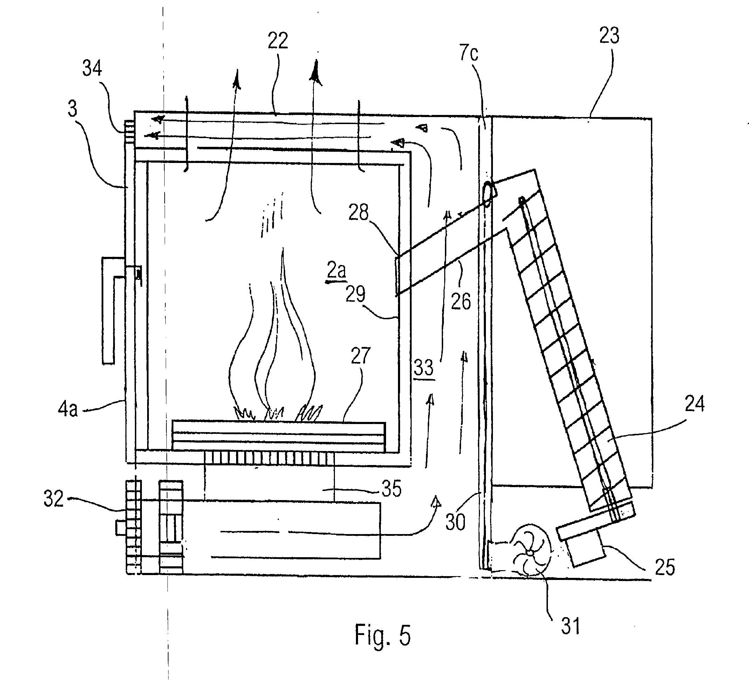

As shown in Figures 4 and 5, an insert for fire-places includes a body 20 into which a combustion chamber 2a has been obtained subject to be loaded with wood that can be introduced into the combustion chamber 2a through an opening 3, accessible through a shutter 4a. The smokes produced by the combustion are ejected through a first opening 22, obtained on the top of body 20, which can be connected to the smoke pipe of the fire-place in order to connect the combustion chamber 2a with an environment external to the room to be heated. The shape and the dimensions of the body 20 are such that the same body can be inserted into a fire-place.

Container means 23 suitable to contain pellets of wood shows a load opening (not represented) suitable to allow the loading of pellets into the container means 23. The container means 23 has shape and dimensions such as to be insertable in a fire-place together the above-mentioned body 20.

The pellets are subject to be transferred from the container means 23 to the combustion chamber 2a through an Archimedean screw 24 driven by a motor-reducer 25. The Archimedean screw 24 is suitable to draw the pellets from a bottom region of the container means 23 and to bring them to the top of a slide ramp 26, which is suitable to drive the fall of the pellets, towards a brazier 27 placed inside the combustion chamber 2a.

The slide ramp 26 results partially introduced into the combustion chamber 2a through a hole 28 made on a lateral surface 29 thereof.

The slide ramp 26 is connected to a first end of a further duct means 30 whose second end is connected to fan means 31 suitable to send into the further duct means 30 cold air coming from the external environment.

The cold air sent into the slide ramp 26 prevents the pellets inside it from the overheating, due to the hot air which penetrates into the slide ramp 26 from the combustion chamber 2a, up to reach the combustion temperature, propagating the combustion to the pellets contained into the Archimedean screw 24 and those contained into the tank 23.

The first end of the further duct means 30 can also be connected, instead of to the slide ramp 26, to the Archimedean screw 24, so as the cold air coming from the fan 31 is sent to the Archimedean screw 24 and, from there, to the slide ramp 26. Inside the body 20, outside the combustion chamber 2a, a pipe 33 is obtained into which air drawn from the environment external to the body 20 is sent, through suction means 32, for example fans. This air, passing through the pipe 33 is heated as a consequence of the heat transmitted into the pipe 33 through the walls of the combustion chamber 2a and is reintroduced into the environment from which it was drawn through some openings 34, for examples slots, obtained on the upper portion of the body 20, for example on the upper portion of the shutter 4a. Downwards the combustion chamber 2a a drawer 35 is obtained for the collection of the ashes produced by the combustion of the fuel material.

An electric control device (not shown), in case including an electronic board, placed on an external surface of the body 20 or the container means 23, allows the user to start the feeding of the pellets, to stop it, or to regulate it and to select a desired temperature level into the room to be heated.

Possible pressure and thermo-switches not represented allow the temperature control into the heated rooms.

## Claims

1. Heating means for heating domestic environments, including a combustion chamber (2, 2a) provided with inlet means (14, 28) arranged to introduce therein fuel means (8), said combustion chamber (2, 2a) being suitable to receive, through further inlet means (4, 4a) further fuel means (3), non necessarily of the same type, dimension, or shape of said fuel means (8), conveyor means (10, 12; 24, 26) arranged for transferring said fuel means (8) in said combustion chamber (2,2a), **characterized in that** said conveyor means (10, 12; 26, 24) is provided with cooling means (17d ; 30) leading into said conveyor means (10,12,26,24) so as to bring fresh air in contact with said fuel means (8) therein.

2. Heating means according to claim 1, wherein said combustion chamber (2, 2a) is suitable to receive said further fuel means in shape of pieces of natural wood (3).

3. Heating means according to claim 1, or 2, and further comprising container means (7, 23) for said fuel means (8) provided with said conveyor means (10, 24) arranged in order to transfer said fuel means (8) in said combustion chamber (2, 2a).

4. Heating means according to claim 3, wherein said container means (7, 23) forms with said combustion chamber (2, 2a) a single heating unit.

5. Heating means according to any preceding claim, wherein said combustion chamber (2, 2a) is suitable to receive said fuel means selected in a group including: wood pellets (8), olive-stones brushed and shattered, walnut-shells, or hazelnut shells.

6. Heating means according to any preceding claim wherein said conveyor means comprises screw conveyor means (10, 24).

7. Heating means according to any preceding claim, wherein said conveyor means includes a star-valve.

8. Heating means according to any preceding claim, wherein said conveyor means further comprises slide ramp means (12, 26) suitable to drive the fall of said fuel means (8) in a brazier (13, 27) contained in said combustion chamber (2).

9. Heating means according to any preceding claim, and having dimensions and shape such that it can be inserted into a hearth of a fire-place.

10. Heating means according to any preceding claim, wherein said cooling means includes pipe means (17d, 30) leading at one end into an outlet region of said conveyor means (10, 24).

11. Heating means according to claim 10, wherein, near said end, said pipe means (17d, 30) is "U" shaped downwards.

12. Heating means according to claim 10, or 11, wherein said pipe means (17d, 30) has another end associated to fan means (18, 31) suitable to blow room air toward said end.

## Patentansprüche

1. Heizeinrichtung zum Heizen von häuslichen Umgebungen, mit einer Brennkammer (2, 2a), die mit einem Einlassmittel (14, 28) versehen ist, das dazu angeordnet ist, ein Brennstoffmittel (8) einzuführen, wobei die Brennkammer (2, 2a) dazu geeignet ist, durch ein weiteres Einlassmittel (4, 4a) ein weiteres Brennstoffmittel (3) aufzunehmen, das nicht notwendigerweise von der selben Art, Dimension oder Form des genannten Brennstoffmittels (8) ist, mit einem Fördermittel (10, 12; 24, 26), das zum Überführen des Brennstoffmittels (8) in die Brennkammer (2, 2a) ausgebildet ist, **dadurch gekennzeichnet, dass** das Fördermittel (10, 12; 26, 24) mit einem Kühlmittel (17d; 30) versehen ist, das in das Fördermittel (10, 12; 26, 24) führt, um so frische Luft in Kontakt mit dem Brennstoffmittel (8) darin zu bringen.

2. Heizeinrichtung nach Anspruch 1, bei der die Brennkammer (2, 2a) zur Aufnahme des weiteren Brennstoffmittels in der Form von Stücken aus natürlichem Holz (3) ausgebildet ist.

3. Heizeinrichtung nach Anspruch 1 oder 2, die ferner ein Behältermittel (7, 23) für das Brennstoffmittel (8) aufweist, das mit dem Fördermittel (10, 24) versehen ist, um das Brennstoffmittel (8) in die Brennkammer (2, 2a) zu überführen.

4. Heizeinrichtung nach Anspruch 3, bei der das Behältermittel (7, 23) mit der Brennkammer (2, 2a) eine einzige Heizeinheit bildet.

5. Heizeinrichtung nach irgendeinem vorhergehenden Anspruch, bei der die Brennkammer (2, 2a) zur Aufnahme des Brennstoffmittels geeignet ist, das aus einer Gruppe ausgewählt ist, zu der gehören: Holz-Pellets (8), gebürstete und zerstoßene Olivenkerne, Walnussschalen oder Haselnussschalen.

6. Heizeinrichtung nach irgendeinem vorhergehenden Anspruch, bei der das Fördermittel ein Schraubenfördermittel (10, 24) aufweist.

7. Heizeinrichtung nach irgendeinem vorhergehenden Anspruch, bei der das Fördermittel ein Sternventil aufweist.

8. Heizeinrichtung nach irgendeinem vorhergehenden Anspruch, bei der das Fördermittel ferner ein Gleitrampenmittel (12, 26) aufweist, das dazu geeignet ist, den Fall des Fördermittels (8) in eine Brennpfanne (13, 27) zu fördern, die in der Brennkammer (2) enthalten ist.

9. Heizeinrichtung nach irgendeinem vorhergehenden Anspruch, die eine solche Dimension und eine solche Form hat, dass sie in eine Feuerstätte eines Kamins eingesetzt werden kann.

10. Heizeinrichtung nach irgendeinem vorhergehenden Anspruch, bei der das Kühlmittel ein Rohrmittel (17d, 30) aufweist, das an einem Ende in einen Auslassbereich des Fördermittels (10, 24) führt.

11. Heizeinrichtung nach Anspruch 10, bei der das Rohrmittel (17d, 30) in der Nähe seines Endes nach unten "U-förmig" ausgebildet ist.

12. Heizeinrichtung nach Anspruch 10 oder 11, bei der das Rohrmittel (17d, 30) ein anderes Ende aufweist, das mit einem Gebläsemittel (18, 31) zusammenhängt, das geeignet ist, Raumluft zu dem genannten Ende zu blasen.

## Revendications

1. Moyens de chauffage pour chauffer des environnements domestiques, comprenant une chambre de combustion (2, 2a) pourvue de moyens d'entrée (14, 28) agencés pour introduire dans celle-ci des moyens de combustible (8), ladite chambre de combustion (2, 2a) étant apte à recevoir, par l'intermédiaire de moyens d'entrée supplémentaires (4, 4a), des moyens de combustible supplémentaires (3), non nécessairement des mêmes type, dimension, ou forme que lesdits moyens de combustible (8), des moyens de transporteur (10, 12 ; 24, 26) agencés pour transférer lesdits moyens de combustible (8) dans ladite chambre de combustion (2, 2a), ***caractérisés en ce que*** lesdits moyens de transporteur (10, 12 ; 26, 24) sont pourvus de moyens de refroidissement (17d ; 30) menant auxdits moyens de transporteur (10, 12 ; 26, 24) afin d'amener de l'air frais en contact avec lesdits moyens de combustible (8) qui s'y trouvent.

2. Moyens de chauffage selon la revendication 1, dans lesquels ladite chambre de combustion (2, 2a) est apte à recevoir lesdits moyens de combustible supplémentaires sous forme de morceaux de bois naturel (3).

3. Moyens de chauffage selon la revendication 1, ou 2, et comprenant de plus des moyens de contenant (7, 23) pour lesdits moyens de combustible (8), équipés desdits moyens de transporteur (10, 24) agencés de manière à transférer lesdits moyens de combustible (8) dans ladite chambre de combustion (2, 2a).

4. Moyens de chauffage selon la revendication 3, dans lesquels lesdits moyens de contenant (7, 23) forment avec ladite chambre de combustion (2, 2a) une unité de chauffage unique.

5. Moyens de chauffage selon l'une quelconque des revendications précédentes, dans lesquels ladite chambre de combustion (2, 2a) est apte à recevoir lesdits moyens de combustible sélectionnés dans un groupe comprenant : les granulés de bois (8), les noyaux d'olive brossés et déchiquetés, les coquilles de noix, ou les coquilles de noisettes.

6. Moyens de chauffage selon l'une quelconque des revendications précédentes, dans lesquels lesdits moyens de transporteur comprennent des moyens de transporteur à vis (10, 24).

7. Moyens de chauffage selon l'une quelconque des revendications précédentes, dans lesquels lesdits moyens de transporteur comprennent une vanne en étoile.

8. Moyens de chauffage selon l'une quelconque des revendications précédentes, dans lesquels lesdits moyens de transporteur comprennent en outre des moyens de rampe de glissière (12, 26) aptes à guider la chute desdits moyens combustibles (8) dans un brasero (13, 27) contenu dans ladite chambre de combustion (2).

9. Moyens de chauffage selon l'une quelconque des revendications précédentes, et ayant des dimensions et une forme telles qu'ils peuvent être insérés dans un foyer d'une cheminée.

10. Moyens de chauffage selon l'une quelconque des revendications précédentes, dans lesquels lesdits moyens de refroidissement comprennent des moyens de tuyau (17d, 30) menant au niveau d'une extrémité dans une zone de sortie desdits moyens de transporteur (10, 24).

11. Moyens de chauffage selon la revendication 10, dans lesquels, près de ladite extrémité, lesdits moyens de tuyau (17d, 30) ont une forme en U vers le bas.

12. Moyens de chauffage selon la revendication 10 ou 11, dans lesquels lesdits moyens de tuyau (17d, 30) ont une autre extrémité associée à des moyens de ventilateur (18, 31) aptes à souffler de l'air ambiant vers ladite extrémité.
